# EUROPEAN PATENT APPLICATION

(11) **EP 4 627 934 A1**
(43) Date of publication of application: **08.10.2025**
(21) Application number: 23897766.4
(22) Date of filing: 28.11.2023
(51) Int. Cl.: A23L 2/52, A23L 2/38, A23L 2/66, A23L 2/68

(54) **PACKAGED ACIDIC BEVERAGE**

(30) Priority: 29.11.2022 JP 2022190049
(71) Applicant: KIRIN HOLDINGS KABUSHIKI KAISHA, Nakano-ku, Tokyo 164-0001 (JP)
(72) Inventor: SUZUKI, Mihoko, Tokyo 164-0001 (JP); YOTSUMOTO, Yuko, Tokyo 164-0001 (JP); NAKAJIMA, Makiko, Tokyo 164-0001 (JP); YOKOYAMA, Kiichi, Tokyo 164-0001 (JP)
(74) Representative: Hoffmann Eitle
(86) International application number: PCT/JP2023/042524
(87) International publication number: WO 2024/117118

(57) **Abstract**

An object of the present invention is to provide a packaged acidic beverage according to the present invention such that a "sour taste" specific to an acidic beverage containing GABA in a prescribed concentration is suppressed, a production method therefor, and others. Provided is a packaged acidic beverage comprising γ-aminobutyric acid (GABA) at 100 mg/L or more and 500 million cells/L or more (e.g., 20 billion cells/L or more) of dead bacterial cells of one or more types of lactic acid bacteria and/or bacteria in the present invention 1 and having a pH of 4.6 or less.

## Description

### Technical Field

The present invention relates to a packaged acidic beverage containing γ-aminobutyric acid (GABA) and, for instance, dead bacterial cells of a "lactic acid bacterium" and/or "bacterium capable of activating plasmacytoid dendritic cells", a production method therefor, and others. The present invention relates more specifically to a packaged acidic beverage containing a predetermined concentration of GABA, wherein a specific "sour taste" occurring while drinking is suppressed in the packaged acidic beverage, a production method therefor, and others.

### Background Art

The innate immune system is primarily responsible for the primary response to bacterial or viral infection, with dendritic cells, in particular, being strong and important component cells. In addition, among dendritic cells, plasmacytoid dendritic cells (pDC) are the major producers of various interferons (IFN) such as type I interferon, which shows growth-inhibitory activity against viruses, and play a crucial role in antiviral host defense (Patent Document 1).

On the other hand, GABA is a kind of non-protein constituent amino acid and is contained in small amounts in tomatoes, eggplants, potatoes, pumpkins, grapes, soybeans, barley, brown rice, and chocolates. GABA is known to have physiological effects such as blood pressure-lowering effects, mental stability effects, brain function-improving effects, neutral fat increase-suppressing effects, and menopausal disorder symptom-alleviating effects. Thus, GABA is used in foods and supplements. However, GABA itself is known to have a unique sour taste (Patent Document 2).

However, it has been unknown that GABA-containing acidic beverages have a new problem of specific "sour taste"; and that the above-described specific sour taste can be suppressed by including, in such acidic beverages, a prescribed concentration of dead bacterial cells of a "lactic acid bacterium" and/or a "bacterium capable of activating plasmacytoid dendritic cells".

### Prior Art Documents

### Patent Documents

Patent Document 1: International Publication WO 2012/091081
Patent Document 2: Japanese unexamined Patent Application Publication No. 2022-076129

### Summary of the Invention

### Object to be Solved by the Invention

The present inventors have found that the new problem of specific "sour taste" occurs in GABA-containing acidic beverages.

An object of the present invention is to provide a packaged acidic beverage such that "sour taste" specific to an acidic beverage containing GABA in a prescribed concentration is suppressed, a production method therefor, and others.

### Means to Solve the Object

The present inventors have conducted intensive research to solve the problem in the present invention and, as a result, have found that the above-described specific "sour taste" can be suppressed by including, in an acidic beverage containing GABA in a prescribed concentration, 500 million cells/L or more (e.g., 20 billion or cells/L or more) of dead bacterial cells of a "lactic acid bacterium" and/or a "bacterium capable of activating plasmacytoid dendritic cells". Then, the present invention has been completed.

Specifically, the present invention provides the following items of the invention and others.
(1) A packaged acidic beverage comprising γ-aminobutyric acid (GABA) at 100 mg/L or more and 500 million cells/L or more (e.g., 20 billion cells/L or more) of dead bacterial cells of one or more types of lactic acid bacteria and having a pH of 4.6 or less;
(2) the packaged acidic beverage according to the above (1), further comprising 0.01 wt% or more of protein;
(3) the packaged acidic beverage according to the above (2), wherein the protein is one or more proteins selected from the group consisting of animal milk proteins and plant proteins;
(4) a packaged acidic beverage comprising γ-aminobutyric acid (GABA) at 100 mg/L or more and 500 million cells/L or more (e.g., 20 billion cells/L or more) of dead bacterial cells of one or more types of lactic acid bacteria and having a pH of 4.6 or less, wherein the lactic acid bacteria are one or more types selected from the group consisting of bacteria of the genus *Lactobacillus,* bacteria of the genus *Streptococcus,* bacteria of the genus *Lactococcus,* bacteria of the genus *Leuconostoc,* bacteria of the genus *Pediococcus,* bacteria of the genus *Enterococcus,* bacteria of the genus *Oenococcus,* bacteria of the genus *Bifidobacterium,* bacteria of the genus *Lentilactobacillus,* bacteria of the genus *Weissella,* and bacteria of the genus *Tetragenococcus*;
(5) the packaged acidic beverage according to the above (4), wherein the lactic acid bacterium is *Lactobacillus rhamnosus*;
(6) a packaged acidic beverage comprising γ-aminobutyric acid (GABA) at 100 mg/L or more and 500 million cells/L or more (e.g., 20 billion cells/L or more) of dead bacterial cells of one or more types of bacteria capable of activating plasmacytoid dendritic cells and having a pH of 4.6 or less;
(7) a method for producing a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of bacteria capable of activating plasmacytoid dendritic cells in the production of the packaged acidic beverage;
(8) a method for producing a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of lactic acid bacteria in the production of the packaged acidic beverage;
(9) a method of suppressing a specific sour taste during drinking of a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of bacteria capable of activating plasmacytoid dendritic cells in the production of the packaged acidic beverage; and
(10) a method of suppressing a specific sour taste during drinking of a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of lactic acid bacteria in the production of the packaged acidic beverage.

The present invention also provides the following items of the invention and others.
[1] A packaged acidic beverage comprising γ-aminobutyric acid (GABA) at 100 mg/L or more and 20 billion cells/L or more of dead bacterial cells of one or more types of lactic acid bacteria and having a pH of 4.6 or less;
[2] the packaged acidic beverage according to the above [1], further comprising 0.01 wt% or more of protein;
[3] the packaged acidic beverage according to the above [2], wherein the protein is one or more types selected from the group consisting of animal milk proteins and plant proteins;
[4] a method for producing a packaged acidic beverage containing γ-aminobutyric acid (GABA) at 100 mg/L or more and having a pH of 4.6 or less, the method comprising including, in the beverage, 20 billion cells/L or more of dead bacterial cells of one or more types of lactic acid bacteria in the production of the packaged acidic beverage; and
[5] a method of suppressing a specific sour taste during drinking of a packaged acidic beverage containing γ-aminobutyric acid (GABA) at 100 mg/L or more and having a pH of 4.6 or less, the method comprising including, in the beverage, 20 billion cells/L or more of dead bacterial cells of one or more types of lactic acid bacteria in the production of the packaged acidic beverage.

### Effect of the Invention

The present invention can provide a packaged acidic beverage such that a "sour taste" specific to an acidic beverage containing GABA in a prescribed concentration is suppressed, a production method therefor, and others.

### Brief Description of Drawings

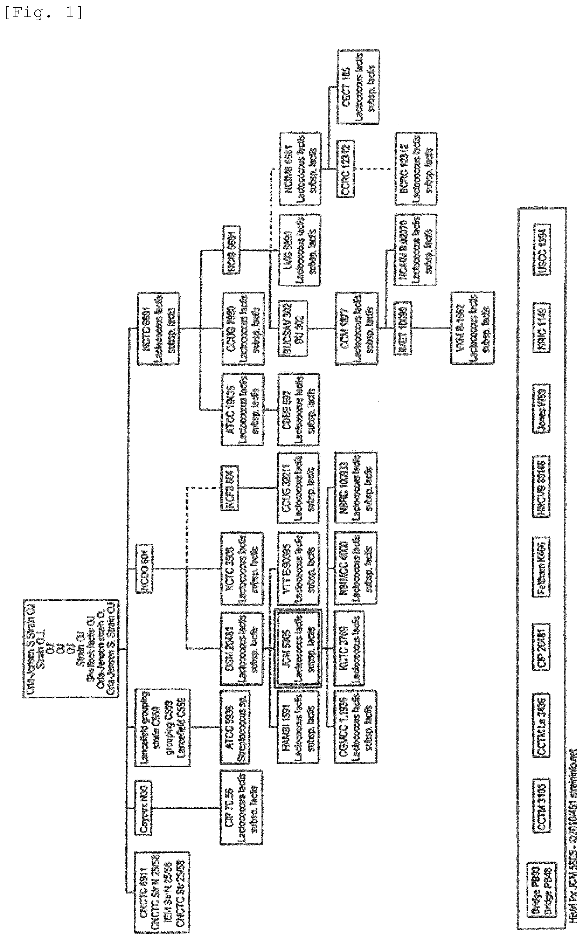

[Figure 1] Figure 1 is a diagram illustrating the relationship between *Lactococcus lactis* subsp. *lactis* JCM5805 strain and equivalent strains to that strain (strains derived from that strain and strains from which that strain is derived).

### Mode of Carrying Out the Invention

The present invention includes embodiments of, for instance,
[1] a method for producing a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of bacteria capable of activating plasmacytoid dendritic cells in the production of the packaged acidic beverage (hereinafter, the packaged acidic beverage is also referred to as a "beverage of the present invention 1");
[2] a packaged acidic beverage comprising γ-aminobutyric acid (GABA) at 100 mg/L or more and 500 million cells/L or more (e.g., 20 billion cells/L or more) of dead bacterial cells of one or more types of lactic acid bacteria and having a pH of 4.6 or less (hereinafter, also referred to as a "beverage of the present invention 2");
[3] a method for producing a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of bacteria capable of activating plasmacytoid dendritic cells in the production of the packaged acidic beverage (hereinafter, also referred to as a "production method of the present invention 1");
[4] a method for producing a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of lactic acid bacteria in the production of the packaged acidic beverage (hereinafter, also referred to as a "production method of the present invention 2");
[5] a method of suppressing a specific sour taste during drinking of a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of bacteria capable of activating plasmacytoid dendritic cells in the production of the packaged acidic beverage (hereinafter, also referred to as a "suppression method of the present invention 1"); and
[6] a method of suppressing a sour taste during drinking of a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of lactic acid bacteria in the production of the packaged acidic beverage (hereinafter, also referred to as a "suppression method of the present invention 2").

### (Bacterium capable of activating pDC)

The "bacterium capable of activating pDC" in the present invention 1 (hereinafter, also referred to as the "bacterium in the present invention 1") is not particularly limited, and refers to, for example, a lactic acid bacterium, acetic acid bacterium, bacterium of the genus *Escherichia,* bacterium of the genus *Bacillus,* or cyanobacterium that can activate pDC. Examples include one or more types of bacteria selected from the group consisting of lactic acid bacteria, acetic acid bacteria, and bacteria of the genus *Bacillus.* The bacterium in the present invention 1 is dead bacterial cells.

The "bacterium capable of activating pDC" in the present invention 1 can induce the production of IFN. It is preferable that the IFN is at least one of Type I IFN (type I interferon), Type II IFN (type II interferon), or Type III IFN (type III interferon). The Type I IFNs refer to cytokines that are considered effective against viral infection and examples thereof include IFN-α (including, for instance, subtype 1, 2, 4, 5, 6, 7, 8, 10, 13, 14, 16, 17, or 21) or IFN-β. The Type II IFNs include IFN-γ and the Type III IFNs include IFN-λ. It is preferable that the "bacterium capable of activating pDC" in the present invention 1 has activity to induce the production of at least Type I IFN.

The IFN, the production of which can be induced by the "bacterium capable of activating pDC" in the present invention 1, is not particularly limited as long as the IFN belongs to any of Type I IFN, Type II IFN, or Type III IFN, and is preferably at least one kind selected from the group consisting of IFN-α, IFN-β and IFN-λ. It is more preferable that at least one of the IFNs is IFN-α; it is more preferable that at least one of the IFNs is IFN-α, and the IFNs are two or more kinds selected from the group consisting of IFN-α, IFN-β, and IFN-λ; and it is particularly preferable that at least two of the two or more kinds of IFNs are IFN-α and IFN-β.

Whether or not the bacterium can activate pDC may be checked by whether pDC phagocytose bacteria, whether cell protrusions appear on the surface of pDC that phagocytose bacteria, or whether pDC that phagocytose bacteria produce IFN (e.g., Type I IFN and/or Type III IFN) when the bacterium is presented to pDC.

The phagocytosis of pDC or the appearance of cell protrusions on the surface of pDC may be checked by, for instance, microscopy or observation using flow cytometry or the like. Preferably, the fluorescent dye-modified bacterium is presented to pDC and the pDC are then observed.

The production of IFN (such as Type I IFN and/or Type III IFN) may be checked, for example, by measuring the amount or concentration of IFN such as IFN-α or IFN-β in the culture system when the bacterium is cultured in the presence of pDC derived from mammalian (e.g., mouse) bone marrow cells.

The IFN concentration can be specifically checked by the following protocols (i) to (iv).
(i) Prepare a cell suspension by suspending erythrocytedepleted mouse-derived bone marrow cells at 1 × 10⁶ cells/mL in RPMI medium prepared at the following composition.
   <Composition of culture medium>
   ·10 vol% FBS
   ·100 U/mL Penicillin/streptomycin
   ·1 mM Sodium pyruvate
   ·2.5 mM HEPES
   ·1 mass% MEM NEAA
   ·50 µM β-Mercaptoethanol
   ·100 ng/mL Flt-3L
(ii) Seed 1 mL each of the prepared cell suspension and culture it in a CO₂ incubator at 37°C and 5 vol% CO₂ for 1 week to induce pDC.
(iii) Suspend the bone marrow cells containing induced pDC at 2 × 10⁵ cells/mL, seed 200 µL each onto a 96-well plate, and add 2 µL each of a bacterial suspension containing, for instance, lactic acid bacteria adjusted using PBS to a concentration of 1 mg/mL.
(iv) Collect, after 24 hours, the culture supernatant and measure IFN-α concentration by ELISA using an IFN-α assay kit.

The "bacterium capable of activating pDC" in the present invention 1 may be expressed by an indicator of producing 30 pg/mL (preferably 50 pg/mL, more preferably 60 pg/mL, still more preferably 70 pg/mL, 80 pg/mL, 90 pg/mL, 100 pg/mL, 150 pg/mL, still more preferably 200 pg/mL, 210 pg/mL, 220 pg/mL, 230 pg/mL, 240 pg/mL, 250 pg/mL, still more preferably 300 pg/mL, 400 pg/mL, 500 pg/mL, 600 pg/mL, 700 pg/mL, and particularly preferably 800 pg/mL) or more IFN-α, after the "bacterium at a final concentration of 10 µg/mL" has been co-cultured for 24 hours with "bone marrow cells that are at a final concentration of 2 × 10⁵ cells/mL and contains pDC obtained by being collected from mouse bone marrow and cultured in cell culture medium containing 100 ng/mL Flt3-L for 7 days".

The pDC activation by the "bacterium capable of activating pDC" in the present invention 1 may involve the ability to promote the expression of activation markers such as CD80, CD86, or MHC class II.

Examples of the above "lactic acid bacterium capable of activating pDC" include, but are not particularly limited to, a bacterium of the genus *Oenococcus,* a bacterium of the genus *Bifidobacterium,* a bacterium of the genus *Weissella,* a bacterium of the genus *Tetragenococcus,* a bacterium of the genus *Lactococcus,* a bacterium of the genus *Leuconostoc,* a bacterium of the genus *Pediococcus,* a bacterium of the genus *Streptococcus,* a bacterium of the genus *Enterococcus,* or a bacterium of the genus *Lactobacillus.* Preferable examples include a bacterium of the genus *Oenococcus,* a bacterium of the genus *Bifidobacterium,* a bacterium of the genus *Weissella,* a bacterium of the genus *Tetragenococcus,* a bacterium of the genus *Lactococcus,* a bacterium of the genus *Leuconostoc,* a bacterium of the genus *Pediococcus,* a bacterium of the genus *Enterococcus,* or a bacterium of the genus *Lactobacillus.*

Note that examples of the bacterium of the genus *Lactobacillus* in the present invention include a bacterium that was classified in the genus *Lactobacillus* before the reclassification of the genus *Lactobacillus.* The examples include a bacterium newly classified, according to the reclassification of the genus Lactobacillus, into the genus *Acetilactobacillus,* the genus *Agrilactobacillus,* the genus *Amylolactobacillus,* the genus *Apilactobacillus,* the genus *Bombilactobacillus,* the genus *Companilactobacillus,* the genus *Dellaglioa,* the genus *Fructilactobacillus,* the genus *Furfurilactobacillus,* the genus *Holzapfelia,* the genus *Lacticaseibacillus,* the genus *Lactiplantibacillus,* the genus *Lapidilactobacillus,* the genus *Latilactobacillus,* the genus *Lentilactobacillus,* the genus *Levilactobacillus,* the genus *Ligilactobacillus,* the genus *Limosilactobacillus,* the genus *Liquorilactobacillus,* the genus *Loigolactobacillus,* the genus *Paralactobacillus,* the genus *Paucilactobacillus,* the genus *Schleiferilactobacillus,* the genus *Secundilactobacillus,* or the like.

Examples of the above bacterium of the genus *Oenococcus* include *Oenococcus oeni.* Specific examples of the bacterium of the genus *Oenococcus* include *Oenococcus oeni* JCM6125.

Examples of the above bacterium of the genus *Bifidobacterium* include *Bifidobacterium animalis* subsp. *lactis* or *Bifidobacterium longum* subsp. *infantis.* Specific examples of the bacterium of the genus *Bifidobacterium* include *Bifidobacterium animalis* subsp. *lactis* JCM10602 or *Bifidobacterium longum* subsp. *infantis* JCM1222.

Examples of the above bacterium of the genus *Weissella* include *Weissella paramesenteroides* or *Weissella viridescens.* Specific examples of the bacterium of the genus *Weissella* include *Weissella paramesenteroides* JCM9890 or *Weissella viridescens* JCM1174.

Examples of the above bacterium of the genus *Tetragenococcus* include *Tetragenococcus halophilus.* Specific examples of the bacterium of the genus *Tetragenococcus* include *Tetragenococcus halophilus* NRIC0098.

Examples of the above bacterium of the genus *Lactococcus* include *Lactococcus lactis, Lactococcus lactis* subsp. *lactis, Lactococcus garvieae, Lactococcus lactis* subsp. *cremoris,* or *Lactococcus lactis* subsp. *hordniae,* or *Lactococcus plantarum.*

Specific examples of the bacterium of the genus *Lactococcus* include *Lactococcus lactis* subsp. *lactis* JCM5805, *Lactococcus lactis* subsp. *lactis* NBRC12007, *Lactococcus lactis* subsp. *lactis* NRIC1150, *Lactococcus lactis* subsp. *lactis* JCM20101, *Lactococcus lactis* subsp. *lactis* JCM7638, *Lactococcus lactis* subsp. *lactis* ATCC11454, *Lactococcus garvieae* NBRC100934, *Lactococcus lactis* subsp. *cremoris* JCM16167, *Lactococcus lactis* subsp. *cremoris* NBRC 100676, *Lactococcus lactis* subsp. *hordniae* JCM1180 or *Lactococcus lactis* subsp. *hordniae* JCM11040, or *Lactococcus plantarum* JCM11056.

Examples of the above bacterium of the genus *Leuconostoc* include *Leuconostoc carnosum* or *Leuconostoc lactis.* Specific examples of the bacterium of the genus *Leuconostoc* include *Leuconostoc carnosum* JCM9695 or *Leuconostoc lactis* NBRC12455.

Examples of the above bacterium of the genus *Pediococcus* include *Pediococcus acidilactici, Pediococcus pentosaceus, Pediococcus cellicola, Pediococcus claussenii, Pediococcus damnosus, Pediococcus ethanolidurans, Pediococcus inopinatus, Pediococcus parvulus,* or *Pediococcus stilesii.* Specific examples of the bacterium of the genus *Pediococcus* include *Pediococcus acidilactici* JCM8797, *Pediococcus acidilactici* K15, or *Pediococcus damnosus* JCM5886.

Examples of the above bacterium of the genus *Streptococcus* include *Streptococcus thermophilus.* Specific examples of the bacterium of the genus *Streptococcus* include *Streptococcus thermophilus* SBC8781.

Examples of the bacterium of the genus *Enterococcus* include *Enterococcus alcedinis.*

Examples of the bacterium of the genus *Lactobacillus* include *Lactobacillus paracasei, Lactobacillus delbrueckii, Lactobacillus acidophilus, Lactobacillus casei, Lactobacillus fructivorans, Lactobacillus hilgardii, Lactobacillus rhamnosus, Lactobacillus gasseri, Lactobacillus acidophilus, Lactobacillus bulgaricus, Lactobacillus parakefiri, Lactobacillus plantarum, or Lactobacillus pentosus.*

Specific examples of the bacterium of the genus *Lactobacillus* include *Lactobacillus paracasei* KW3110, *Lactobacillus paracasei* MCC1849, *Lactobacillus rhamnosus GG, Lactobacillus rhamnosus GG, Lactobacillus rhamnosus* CRL1505, *Lactobacillus gasseri* SBT2055, *Lactobacillus acidophilus L-92, Lactobacillus bulgaricus* OLL1073R-1, *Lactobacillus parakefiri (Lentilactobacillus parakefiri* in the new classification) JCM8573, *Lactobacillus plantarum (Lactiplantibacillus plantarum* in the new classification) L-137, or *Lactobacillus pentosus (Lactiplantibacillus pentosus* in the new classification) ONRICb0240.

Examples of the above "acetic acid bacterium capable of activating pDC" include, but are not particularly limited to, a bacterium of the genus *Gluconacetobacter,* a bacterium of the genus *Acetobacter,* or a bacterium of the genus *Gluconobacter.* Preferred is a bacterium of the genus *Gluconacetobacter.* More preferred is *Gluconacetobacter hansenii.* Still more preferred is *Gluconacetobacter hansenii* GK-1.

Examples of the above *"Bacillus* bacterium capable of activating pDC" include, but are not particularly limited to, *Bacillus coagulans.* Specific examples of the bacterium of the genus *Bacillus* include *Bacillus coagulans* SANK70258.

### (Dead bacterial cells of lactic acid bacterium)

In the present invention 2, dead bacterial cells of one or more types of lactic acid bacteria are used.

The "lactic acid bacterium" is a general term for all the lactic acid bacteria recognized in the classification and is not limited by, for instance, the genus, the species, and the strain. Examples of such a "lactic acid bacterium" include a bacterium that produces a large amount of lactic acid (preferably, 50% or more of the consumed sugar) by lactic acid fermentation of sugar. Examples include a bacterium of the genus *Lactobacillus,* a bacterium of the genus *Streptococcus,* a bacterium of the genus *Lactococcus,* a bacterium of the genus *Leuconostoc,* a bacterium of the genus *Pediococcus, Enterococcus,* a bacterium of the genus *Oenococcus,* a bacterium of the genus *Bifidobacterium,* a bacterium of the genus *Weissella,* or *a bacterium of the genus Tetragenococcus.*

Examples of the genus and species of the lactic acid bacterium for dead bacterial cells used in the present invention 2 include, but are not particularly limited to, one or more types of bacteria selected from the group consisting of bacteria of the genus *Lactobacillus,* bacteria of the genus *Streptococcus,* bacteria of the genus *Lactococcus,* bacteria of the genus *Leuconostoc,* bacteria of the genus *Pediococcus,* bacteria of the genus *Enterococcus,* bacteria of the genus *Oenococcus,* bacteria of the genus *Bifidobacterium,* bacteria of the genus *Weissella,* and bacteria of the genus *Tetragenococcus.* Also included are one or more types of bacteria selected from the group consisting of bacteria of the genus *Lactobacillus,* bacteria of the genus *Streptococcus,* bacteria of the genus *Lactococcus,* bacteria of the genus *Leuconostoc,* bacteria of the genus *Pediococcus,* and bacteria of the genus *Enterococcus.* Preferred are one or more types of bacteria selected from the group consisting of bacteria of the genus *Lactococcus.* More preferred are one or more types of bacteria selected from the group consisting of *Lactococcus lactis.* Still more preferred are one or more types of bacteria selected from the group consisting of *Lactococcus lactis* subsp. *lactis.*

More specific preferable embodiments of dead bacterial cells in the present invention 2 include dead bacterial cells of one or more types of bacteria selected from the group consisting of *Lactobacillus acidophilus* (e.g., *Lactobacillus acidophilus* L-92), *Lactobacillus delbrueckii* subsp. *bulgaricus* (e.g., *Lactobacillus bulgaricus* OLL1073R-1), *Lactobacillus delbrueckii* subsp. *delbrueckii, Lactobacillus delbrueckii* subsp. *lactis, Lactobacillus casei, Lactobacillus paracasei* (e.g., *Lactobacillus paracasei* KW3110 and *Lactobacillus paracasei* MCC1849), *Lactobacillus gasseri (Lactobacillus gasseri* SBT2055), *Lactobacillus helveticus, Lactobacillus johnsonii, Lactobacillus plantarum* (*Lactiplantibacillus plantarum* in the new classification) (e.g., *Lactiplantibacillus plantarum* L-137), *Lactobacillus brevis, Lactobacillus casei* subsp. *rhamnosus* (e.g., *Lactobacillus rhamnosus* GG, *Lactobacillus rhamnosus* CRL1505), *Lactobacillus pentosus (Lactobacillus pentosus* ONRICb0240 or the like), *Lactobacillus fermentum, Lactobacillus fructivorans, Lactobacillus hilgardii, Streptococcus salivarius* subsp. *thermophilus, Lactococcus lactis* subsp. *lactis* (e.g., *Lactococcus lactis* subsp. *lactis* JCM5805, *Lactococcus lactis* subsp. *lactis* NBRC12007, *Lactococcus lactis* subsp. *lactis* NRIC1150, *Lactococcus lactis* subsp. *lactis* JCM20101, *Lactococcus lactis* subsp. *lactis* JCM7638, *Lactococcus lactis* subsp. *lactis* ATCC11454), *Lactococcus lactis* subsp. *lactis* biovar *diacetylactis, Lactococcus lactis* subsp. *cremoris* (e.g., *Lactococcus lactis* subsp. *cremoris* JCM16167, *Lactococcus lactis* subsp. *cremoris* NBRC100676), *Lactococcus raffinolactis, Lactococcus piscium, Lactococcus plantarum* (e.g., *Lactococcus plantarum* JCM11056), *Lactococcus garvieae* (e.g., *Lactococcus garvieae* NBRC100934), *Lactococcus lactis* subsp. *hordniae* (e.g., *Lactococcus lactis* subsp. *hordniae* JCM1180, *Lactococcus lactis* subsp. *hordniae* JCM11040), *Leuconostoc mesenteroides* subsp. *cremoris* (e.g., *Leuconostoc mesenteroides* subsp. *cremoris* JCM16167, *Leuconostoc mesenteroides* subsp. *cremoris* NBRC100676), *Leuconostoc lactis* (e.g., *Leuconostoc lactis* NBRC12455), *Leuconostoc carnosum* (e.g., *Leuconostoc carnosum* JCM9695), *Pediococcus damnosus* (e.g., *Pediococcus damnosus* JCM5886), *Pediococcus pentosaceus, Pediococcus acidilactici* (e.g., *Pediococcus acidilactici* JCM8797 and *Pediococcus acidilactici* K15), *Pediococcus cellicola, Pediococcus claussenii, Pediococcus ethanolidurans, Pediococcus inopinatus, Pediococcus parvulus, Pediococcus stilesii, Enterococcus faecalis, Enterococcus faecium, Enterococcus alcedinis, Oenococcus oeni* (e.g., *Oenococcus oeni* JCM6125), *Bifidobacterium animalis* subsp. *lactis* (e.g., *Bifidobacterium animalis* subsp. *lactis* JCM10602), *Bifidobacterium longum* subsp. *infantis* (e.g., *Bifidobacterium longum* subsp. *infantis* JCM1222), *Weissella paramesenteroides* (e.g., *Weissella paramesenteroides* JCM9890), *Weissella viridescens* (e.g., *Weissella viridescens* JCM1174), and *Tetragenococcus halophilus* (e.g., *Tetragenococcus halophilus* NRIC0098). Also included are dead bacterial cells of one or more types of bacteria selected from the group consisting of *Lactobacillus acidophilus* (e.g., *Lactobacillus acidophilus* L-92), *Lactobacillus delbrueckii* subsp. *bulgaricus* (e.g., *Lactobacillus bulgaricus* OLL1073R-1), *Lactobacillus delbrueckii* subsp. *delbrueckii, Lactobacillus delbrueckii* subsp. *lactis, Lactobacillus casei, Lactobacillus paracasei* (e.g., *Lactobacillus paracasei* KW3110 and *Lactobacillus paracasei* MCC1849), *Lactobacillus gasseri (Lactobacillus gasseri* SBT2055), *Lactobacillus helveticus, Lactobacillus johnsonii, Lactobacillus parakefiri (Lentilactobacillus parakefiri* in the new classification) (e.g., *Lactobacillus parakefiri* JCM8573), *Lactobacillus plantarum (Lactiplantibacillus plantarum* in the new classification) (e.g., *Lactiplantibacillus plantarum* L-137), *Lactobacillus brevis, Lactobacillus casei* subsp. *rhamnosus* (e.g., *Lactobacillus rhamnosus* GG, *Lactobacillus rhamnosus* CRL1505), *Lactobacillus pentosus* (e.g., *Lactobacillus pentosus* ONRICb0240), *Lactobacillus fermentum, Lactobacillus fructivorans, Lactobacillus hilgardii, Streptococcus salivarius* subsp. *thermophilus, Lactococcus lactis* subsp. *lactis* (e.g., *Lactococcus lactis* subsp. *lactis* JCM5805, *Lactococcus lactis* subsp. *lactis* NBRC12007, *Lactococcus lactis* subsp. *lactis* NRIC1150, *Lactococcus lactis* subsp. *lactis* JCM20101, *Lactococcus lactis* subsp. *lactis* JCM7638, *Lactococcus lactis* subsp. *lactis* ATCC11454), *Lactococcus lactis* subsp. *lactis* biovar *diacetylactis, Lactococcus lactis* subsp. *cremoris* (e.g., *Lactococcus lactis* subsp. *cremoris* JCM16167, *Lactococcus lactis* subsp. *cremoris* NBRC100676), *Lactococcus raffinolactis, Lactococcus piscium, Lactococcus plantarum* (e.g., *Lactococcus plantarum* JCM11056), *Lactococcus garvieae* (e.g., *Lactococcus garvieae* NBRC100934), *Lactococcus lactis* subsp. *hordniae* (e.g., *Lactococcus lactis* subsp. *hordniae* JCM1180, *Lactococcus lactis* subsp. *hordniae* JCM11040), *Leuconostoc mesenteroides* subsp. *cremoris* (e.g., *Leuconostoc mesenteroides* subsp. *cremoris* JCM16167, *Leuconostoc mesenteroides* subsp. *cremoris* NBRC100676), *Leuconostoc lactis* (e.g., *Leuconostoc lactis* NBRC12455), *Leuconostoc carnosum* (e.g., *Leuconostoc carnosum* JCM9695), *Pediococcus damnosus* (e.g., *Pediococcus damnosus* JCM5886), *Pediococcus pentosaceus, Pediococcus acidilactici* (e.g., *Pediococcus acidilactici* JCM8797 and *Pediococcus acidilactici* K15), *Pediococcus cellicola, Pediococcus claussenii, Pediococcus ethanolidurans, Pediococcus inopinatus, Pediococcus parvulus, Pediococcus stilesii, Enterococcus faecalis,* and *Enterococcus faecium.* Preferably included are dead bacterial cells of one or more types of bacteria selected from the group consisting of *Lactobacillus acidophilus, Lactobacillus delbrueckii* subsp. *bulgaricus, Lactobacillus delbrueckii* subsp. *lactis, Lactobacillus delbrueckii* subsp. *delbrueckii, Lactobacillus casei, Lactobacillus paracasei, Lactobacillus gasseri, Lactobacillus helveticus, Lactobacillus johnsonii, Lactobacillus parakefiri* (e.g., *Lactobacillus parakefiri* JCM8573), *Lactobacillus plantarum, Lactobacillus brevis, Lactobacillus casei subsp. rhamnosus (e.g., Lactobacillus rhamnosus GG, Lactobacillus rhamnosus CRL1505)*, *Lactobacillus pentosus, Lactobacillus fermentum, Lactobacillus fructivorans, Lactobacillus hilgardii, Streptococcus salivarius subsp. thermophilus, Lactococcus lactis subsp. lactis, Lactococcus lactis subsp. lactis biovar diacetylactis, Lactococcus lactis subsp. cremoris, Lactococcus raffinolactis, Lactococcus piscium, Lactococcus plantarum, Lactococcus garvieae, Lactococcus lactis* subsp. *hordniae, Leuconostoc mesenteroides subsp. cremoris,* and *Leuconostoc lactis.* More preferably included are dead bacterial cells of one or more types of bacteria selected from the group consisting of *Lactococcus lactis subsp. lactis, Lactococcus lactis biovar diacetylactis, Lactococcus lactis subsp. cremoris, Lactococcus raffinolactis, Lactococcus piscium, Lactococcus plantarum, Lactococcus garvieae,* and *Lactococcus lactis subsp. hordniae.* Still more preferably included are dead bacterial cells of *Lactococcus lactis subsp. lactis.* More preferably included are dead bacterial cells of one or more types of bacteria selected from the group consisting of *Lactococcus lactis subsp. lactis* JCM5805, *Lactococcus lactis subsp. lactis* JCM20101, *Lactococcus lactis subsp. lactis* NBRC12007, and *Lactococcus lactis subsp. lactis* NRIC1150. Particularly preferably included are dead bacterial cells of *Lactococcus lactis subsp. lactis* JCM5805.

In addition, other preferred embodiments of the genus and species of lactic acid bacterium for dead bacterial cells used in the present invention 2 include one or more types of bacteria selected from the group consisting of bacteria of the genus *Lactococcus* and bacteria of the genus *Lactobacillus.* Preferred are one or more types of bacteria selected from the group consisting of *Lactococcus lactis* and *Lactobacillus rhamnosus.* More preferred are one or more types of bacteria selected from the group consisting of *Lactococcus lactis* subsp. *lactis* and *Lactobacillus rhamnosus.*

More specific other preferred embodiments of the dead bacterial cells in the present invention 2 include dead bacterial cells of one or more types of bacteria selected from the group consisting of *Lactococcus lactis subsp. lactis, Lactococcus lactis subsp. lactis biovar diacetylactis, Lactococcus lactis subsp. cremoris, Lactococcus raffinolactis, Lactococcus piscium, Lactococcus plantarum, Lactococcus garvieae, Lactococcus lactis subsp. hordniae, Lactobacillus acidophilus, Lactobacillus delbrueckii* subsp. *bulgaricus, Lactobacillus delbrueckii* subsp. *lactis, Lactobacillus delbrueckii* subsp. *delbrueckii, Lactobacillus casei, Lactobacillus paracasei, Lactobacillus gasseri, Lactobacillus helveticus, Lactobacillus johnsonii, Lactobacillus parakefiri* (e.g., *Lactobacillus parakefiri* JCM8573), *Lactobacillus plantarum, Lactobacillus brevis, Lactobacillus casei subsp. rhamnosus (e.g., Lactobacillus rhamnosus* GG, *Lactobacillus rhamnosus* CRL1505), *Lactobacillus pentosus, Lactobacillus fermentum, Lactobacillus fructivorans,* and *Lactobacillus hilgardii.* Preferred are dead bacterial cells of one or more types of bacteria selected from the group consisting of *Lactococcus lactis* subsp. *lactis* and *Lactobacillus rhamnosus.* More preferred are dead bacterial cells of one or more types of bacteria selected from the group consisting of *Lactococcus lactis subsp. lactis* JCM5805, *Lactococcus lactis subsp. lactis* JCM20101, *Lactococcus lactis subsp. lactis* NBRC12007, *Lactococcus lactis subsp. lactis* NRIC1150, *Lactobacillus rhamnosus* GG, and *Lactobacillus rhamnosus* CRL1505. Particularly preferred are dead bacterial cells of one or more types of bacteria selected from the group consisting of *Lactococcus lactis* subsp. *lactis* JCM5805 and *Lactobacillus rhamnosus* CRL1505. Still more preferred are dead bacterial cells of *Lactococcus lactis* subsp. *lactis* JCM5805 or dead bacterial cells of *Lactobacillus rhamnosus* CRL1505.

Other preferred embodiments of dead bacterial cells in the present invention 2 include those of one or more types selected from the group consisting of bacteria of the genus *Lactococcus.* Preferably included are those of one or more types selected from the group consisting of *Lactococcus lactis* subsp. *lactis* JCM5805, *Lactococcus lactis* subsp. *lactis* NBRC12007, *Lactococcus lactis* subsp. *lactis* NRIC1150, *Lactococcus lactis* subsp. *lactis* JCM20101, *Lactococcus lactis* subsp. *lactis* JCM7638, *Lactococcus lactis* subsp. *lactis* ATCC11454, *Lactococcus garvieae* NBRC100934, *Lactococcus lactis* subsp. *cremoris* JCM16167, *Lactococcus lactis* subsp. *cremoris* NBRC 100676, *Lactococcus lactis* subsp. *hordniae* JCM1180, and *Lactococcus lactis* subsp. *hordniae* JCM11040.

With respect to the bacterial strains of dead bacterial cells as mentioned herein, in the present invention (i.e., the present invention 1 and/or the present invention 2), bacterial strains equivalent to the above bacterial strains are included in the bacterial strains as long as an effect of suppressing a specific sour taste is exerted when the dead bacterial cells are contained at a prescribed concentration in an acidic beverage containing GABA in a prescribed concentration. Here, the equivalent bacterial strain refers to a bacterial strain derived from the above-mentioned bacterial strain or a bacterial strain from which the above-mentioned bacterial strain is derived or a descendant bacterial strain of the above-mentioned bacterial strain. The equivalent bacterial strains may be stored in other bacterial strain repositories. Figure 1 shows the bacterial strains derived from *Lactococcus lactis* subsp. *lactis* JCM5805, and bacterial strains from which *Lactococcus lactis* subsp. *lactis* JCM5805 is derived. Equivalent bacterial strains of *Lactococcus lactis* subsp. *lactis* JCM5805 as shown in Figure 1 can also be used for dead bacterial cells in the present invention, as long as the dead bacterial cells produce an effect of suppressing specific sour taste when they are contained at a prescribed concentration in an acidic beverage containing GABA in a prescribed concentration. As used herein, the case of *Lactococcus lactis* subsp. *lactis* JCM5805 (i.e., *Lactococcus lactis* JCM5805) also includes these equivalent bacterial strains. In addition, the case of *Lactobacillus rhamnosus* CRL1505 also includes these equivalent bacterial strains. Further, the JCM strains among the above strains of lactic acid bacterium are available from the Microbial Materials Development Laboratory, RIKEN BioResource Center (3-1-1, Koyadai, Tsukuba, Ibaraki); the NBRC strains are available from Biological Resource Center, the National Institute of Technology and Evaluation (2-5-8, Kazusakamatari, Kisarazu, Chiba); the NRIC strains are available from the Culture Collection Center at Tokyo University of Agriculture (1-1-1 Sakuragaoka, Setagaya-ku, Tokyo); and the ATCC strains are available from American Type Culture Collection (USA), respectively.

*Lactococcus lactis* subsp. *lactis* JCM5805 strain can be obtained from the Microbial Materials Development Laboratory, RIKEN BioResource Center as described above. However, it is possible to use, in the present invention, the same strain as JCM5805 strain, which strain is stored in repositories other than the Microbial Materials Development Laboratory, RIKEN BioResource Center. Specifically, the same strain as JCM5805 strain can be obtained from the Biological Resource Center, the National Institute of Technology and Evaluation (2-5-8, Kazusakamatari, Kisarazu, Chiba), the Culture Collection Center at Tokyo University of Agriculture (1-1-1 Sakuragaoka, Setagaya-ku, Tokyo), American Type Culture Collection (USA), and others.

The "dead bacterial cells of a lactic acid bacterium and/or a bacterium in the present invention 1" herein are not particularly limited as long as they are dead bacterial cells of a lactic acid bacterium and/or a bacterium in the present invention 1, and may be a dried material or nondried material. The dried material is preferred from the viewpoint of storage stability of dead bacterial cells of a lactic acid bacterium and/or a bacterium in the present invention 1. Preferable examples include dried powder.

The method of preparing dead bacteria cells of a lactic acid bacterium and/or bacterium in the present invention 1 is not particularly limited. Examples include: a method of sterilizing a culture medium in which a lactic acid bacterium and/or a bacterium in the present invention 1 is cultured, and then collecting the bacterial cells by, for instance, filtration or centrifugation; and a method of collecting, from a culture medium in which a lactic acid bacterium and/or a bacterium in the present invention 1 is cultured, bacterial cells by, for instance, filtration or centrifugation and then sterilizing them. Further drying and/or crushing treatment may be optionally performed.

Note that the means of sterilization is not restricted, and conventional means to kill bacteria, such as UV or γ-ray irradiation, as well as heating, may be used. In addition, sterilization treatment during beverage preparation may be used to kill a lactic acid bacterium and/or a bacterium in the present invention 1 in the beverage.

In the present invention, the bacterial cell concentration of dead bacterial cells of one or more types of lactic acid bacteria and/or bacteria in the present invention 1 in a packaged acidic beverage is not particularly limited. The total concentration of dead bacterial cells of a lactic acid bacterium and/or a bacterium in the present invention 1 is, for example, 500 million cells/L or more, 1 billion cells/L or more, 1.3 billion cells/L or more, 5 billion cells/L or more, 15 billion cells/L or more, or 20 billion cells/L or more. From the viewpoint of producing a higher effect of suppressing a specific sour taste, the total concentration is preferably 50 billion cells/L or more, more preferably 100 billion cells/L or more, still more preferably 200 billion cells/L or more, more preferably 300 billion cells/L or more, and still more preferably 1 trillion cells/L or more. In addition, the upper limit of bacterial cell concentration of dead bacterial cells of one or more types of lactic acid bacteria and/or bacteria in the present invention 1 in a packaged acidic beverage is not particularly limited. The total number of dead bacterial cells of a lactic acid bacterium and/or a bacterium in the present invention 1 is, for example, 8 trillion cells/L or less, 6 trillion cells/L or less, 4 trillion cells/L or less, 2 trillion cells/L or less, 1 trillion cells/L or less, 500 billion cells/L or less, 350 billion cells/L or less, 200 billion cells/L or less, 175 billion cells/L or less, 150 billion cells/L or less, etc. These lower and upper limits may be each optionally combined within the range of possible combinations of lower and upper limits.

The bacterial cell concentration of dead bacterial cells of a lactic acid bacterium and/or a bacterium in the present invention 1 in a packaged acidic beverage may be adjusted by adjusting the number of dead bacterial cells of the lactic acid bacterium and/or the bacterium in the present invention 1 as blended in the beverage.

Note that as a method of measuring the number of dead bacterial cells of a lactic acid bacterium and/or a bacterium in the present invention 1 in a packaged acidic beverage, a known method of counting the number of lactic acid bacteria and/or bacteria in the present invention 1 is included without any particular limitation. Examples include direct microscopy, particle electrical sensing zone method, PCR, or flow cytometry. Preferred is flow cytometry.

### (γ (gamma)-Aminobutyric acid) (i.e., GABA)

The packaged beverage of the present invention is an acidic beverage with a suppressed sour taste ("specific sour taste" herein), namely astringent and pungent acidity that makes the sides of the jaw squeak, as produced by a combination of the sour taste of an acidulant in an acidic beverage and the peculiar distinct taste of GABA itself.

GABA is a kind of amino acid widely contained in, for instance, vegetables, fruits, cereals, and fermented foods. GABA used in the present invention is not particularly limited, and GABA extracted from, for instance, vegetables, fruits, or grains, GABA produced by fermentation, and GABA obtained by organic synthesis, etc., can be used. However, from the viewpoint of reducing the influence on the flavor of the beverage itself, it is preferable to use purified GABA products containing GABA at 80 wt% or more, preferably 85 wt% or more, and more preferably 90 wt% or more, as the GABA used in the present invention. It is possible to use various forms of purified GABA products, such as solid, aqueous solution, and slurry as the forms of the purified GABA products. Examples of a commercially available purified GABA product include GABA 100% Pure Powder (manufactured by NOW FOODS) or Oryza GABA (registered trademark) Extract HC-90 (manufactured by Oryza Oil&Fat Chemical Co., Ltd.).

The GABA concentration of a packaged acidic beverage in the present invention is not particularly limited as long as the concentration is 100 mg/L or more. From the viewpoint of providing stronger specific sour taste such that the significance of the present invention is more appreciated, the GABA concentration is preferably 150 mg/L or more, more preferably 200 mg/L or more, and still more preferably 1000 mg/L or more. The upper limit of GABA concentration is not particularly limited, but is 100000 mg/L or less or 500000 mg/L or less. These lower and upper limits may be each optionally combined. The GABA concentration in the beverage may be measured using an amino acid analyzer.

The ratio of the bacterial cell concentration to the GABA concentration in the present invention, i.e., (Content [100 million cells/L] of dead bacterial cells of a lactic acid bacterium and/or a bacterium in the present invention 1)/(GABA concentration [mg/L]), is not particularly limited. From the viewpoint that the significance of the present invention is more appreciated, the lower limit is, for example,0.0001 or more, 0.001 or more, 0.01 or more, or 0.1 or more or 0.2 or more, and the upper limit is, for example, 600 or less, 300 or less, 100 or less, 60 or less, or 40 or less. These lower and upper limits may be each optionally combined.

### (pH)

The pH of the packaged acidic beverage of the present invention is not particularly limited as long as it is 4.6 or less, but preferably 4.2 or less or 4.0 or less from the viewpoint of providing stronger specific sour taste such that the significance of the present invention is more appreciated. The lower limit of pH is not particularly limited, but may be, for example, 2.5 or higher, 3.0 or higher, or 3.5 or higher. These lower and upper limits may be each optionally combined. Note that aqueous GABA solutions are generally aqueous solutions with a near neutral pH around 6 to 7.

The pH may be adjusted, depending on the design of flavor of the beverage of the present invention, for example, with or without the addition of acidulant or by adjusting the concentration of acidulant, or with or without the addition of alkali salt or by adjusting the concentration of alkali salt. Preferable examples of the beverage of the present invention include an acidulant-containing beverage. Note that the "acidulant" in the "acidulant-containing beverage" is not limited to a case where it is blended in the beverage as an acidifier. As long as the beverage contains a substance that can also function as an acidulant, the beverage is herein included in the "acidulant-containing beverage".

Examples of the above acidulant (or a substance that can also function as an acidulant) include citric acid, phosphoric acid, gluconic acid, lactic acid, tartaric acid, malic acid, phytic acid, acetic acid, succinic acid, or a salt thereof. Citric acid or a salt thereof is preferred. Preferable examples of such a salt include a sodium salt or a calcium salt. Suitable embodiments of the acidulant (or a substance that can also function as an acidulant) include a combination of citric acid and trisodium citrate.

When the beverage of the present invention contains an acidulant(s), the total content of acidulants (e.g., one or more acidulants selected from the group consisting of citric acid, phosphoric acid, gluconic acid, lactic acid, tartaric acid, malic acid, phytic acid, acetic acid, succinic acid, and salts thereof) in the beverage is not particularly limited. The content based on a total amount of the beverage is, for example, 0.005 wt% or more, 0.01 wt% or more, 0.05 wt% or more, 0.1 wt% or more, 0.4 wt% or more, or 0.5 wt% or more because the distinct taste of GABA is combined to produce a more specific sour taste, so that the present invention is made more significant. The upper limit is, for example, less than 0.7 wt%, 0.65 wt% or less, 0.6 wt% or less, or 0.5 wt% or less. Note that when a salt of an acid is used, the content (wt%) is calculated by converting the salt of an acid in terms of the acid as the content of the salt of an acid.

It is preferable to use, as the above alkali salt, one or more alkali agents selected from the group consisting of sodium bicarbonate, sodium carbonate, sodium hydroxide, and other alkali agents including sodium salts, etc. It is more preferable to use a sodium salt such as sodium bicarbonate.

The pH of the packaged acidic beverage of the present invention refers to a pH at 20°C and may be measured by the common procedure using a pH meter (e.g., main unit "HM-41X"; electrode "ST-5741C"; both manufactured by DKK-TOA CORPORATION) .

### (Protein)

The packaged acidic beverage of the present invention needs not to contain any protein other than the proteins contained in dead bacterial cells of a lactic acid bacterium and/or a bacterium in the present invention 1. However, from the viewpoint of producing a higher effect of suppressing a specific sour taste, it is preferable to further include protein.

As used herein, the term "protein" means any protein other than the proteins contained in dead bacterial cells of a lactic acid bacterium and/or a bacterium in the present invention 1 in the beverage. Such protein is not particularly limited as long as the inclusion of the protein at a given concentration in the beverage of the present invention can produce a greater inhibitory effect on the specific sour taste. Examples include one or more proteins selected from the group consisting of animal milk proteins and plant proteins.

The above "animal milk protein" is not particularly limited as long as it is a protein of animal milk, but cow milk protein is preferred. The animal milk protein used in the present invention may be animal milk protein itself or a composition containing animal milk protein. Examples of the composition containing animal milk protein include milk components (i.e., milk fat and/or nonfat milk solids). More specific examples include raw milk or its processed products (e.g., thickened cow milk, low-fat milk, skimmed milk, concentrated milk, nonfat concentrated milk, full-fat milk powder, prepared milk powder, skimmed milk powder, condensed milk, fermented milk, cream, cheese, butter, whey powder, buttermilk powder). Among them, skimmed milk powder is preferred.

The above "plant protein" is not particularly limited as long as it is a plant protein, but examples include one or more proteins selected from the group consisting of pea proteins, soybean proteins, oat proteins, and almond proteins. The plant protein used in the present invention may be plant protein itself or a composition containing plant protein. Examples of the composition containing plant protein include one or more kinds selected from the group consisting of processed pea products (e.g., pea powder, pea milk), processed soybean products (e.g., soybean powder, soy milk), processed oat products (e.g., oat powder, oat milk), and processed almond products (e.g., almond powder, almond milk).

The packaged acidic beverage of the present invention may further contain protein. In this case, the protein concentration in the packaged acidic beverage of the present invention is not particularly limited. However, from the viewpoint of producing a higher effect of suppressing a specific sour taste, the concentration is preferably 0.11 wt% or more (or 0.11 to 1.3 wt% or 0.11 to 1 wt%) and more preferably 0.22 wt% or more (or 0.22 to 1 wt% or 0.22 to 0.47 wt%).

The packaged acidic beverage of the present invention may further contain skimmed milk powder as protein. In this case, the concentration of skimmed milk powder in the packaged acidic beverage of the present invention is not particularly limited. However, from the viewpoint of producing a higher effect of suppressing a specific sour taste, the concentration is preferably 0.3 wt% or more (or 0.3 to 3.5 wt% or 0.3 to 2.9 wt%) and more preferably 0.6 wt% or more (or 0.6 to 2.9 wt% or 0.6 to 1.3 wt%).

The ratio of the protein concentration to the GABA concentration in the present invention, i.e., (Protein concentration [wt%]) /(GABA concentration [mg/L]), is not particularly limited. However, from the viewpoint of appreciating more of the significance of the present invention, the lower limit is, for example, 0.0000001 or more, 0.000001 or more, 0.00001 or more, or 0.0001 or more. The upper limit is, for example, 0.1 or less or 0.01 or less. These lower and upper limits may be each optionally combined.

The protein concentration in the packaged acidic beverage of the present invention may be measured according to the combustion method or other methods.

### (Optional components)

The packaged acidic beverage of the present invention contains, as essential ingredients, GABA and dead bacterial cells of one or more types of lactic acid bacteria and/or bacteria in the present invention 1 as well as water. The packaged acidic beverage of the present invention may or may not contain, as optional components, any one or more additives selected from the above-described proteins, acidulants, flavoring agents, pigments, sweeteners, fruit juices, antioxidants, preservatives, stabilizers, emulsifying agents, and pH-adjusting agents.

Examples of the above "sweetener" include a monosaccharide (e.g., fructose, glucose, tagatose, arabinose), a disaccharide (e.g., lactose, trehalose, maltose, sucrose), crystalline sugars (e.g., a monosaccharide and a disaccharide, etc., in powdered syrup); an oligosaccharide (e.g., a maltooligosaccharide, a galactooligosaccharide); non-crystalline sugars (e.g., syrup, isomerized liquid sugar (e.g., fructose-glucose liquid sugar)); a sugar alcohol (e.g., maltitol, lactitol, sorbitol, mannitol, xylitol, erythritol); and a high-intensity sweetener (e.g., sucralose, stevia, licorice root extract, thaumatin, glycyrrhizin, saccharin, aspartame, acesulfame K). From the viewpoint of natural sweetness, sugars (crystalline and non-crystalline sugars) are preferred. In addition, from the viewpoint of low calorie content, a sugar alcohol and/or a high-intensity sweetener is preferred. When a sweetener is used, the concentration of sweetener in a packaged acidic beverage is not particularly limited. If the sweetener is sugars, the concentration is, for example, 0.1 to 10 wt% or 0.5 to 8 wt%. If the sweetener is a sugar alcohol or high-intensity sweetener, the concentration corresponding to the degree of sweetness in terms of sucrose is 0.1 to 10 wt% or 0.5 to 8 wt%.

### (Beverage of the present invention)

The beverage of the present invention is not particularly limited as long as the beverage is a packaged acidic beverage comprising γ-aminobutyric acid (GABA) at 100 mg/L or more and 20 billion cells/L or more of dead bacterial cells of one or more types of lactic acid bacteria and/or bacteria in the present invention 1 and having a pH of 4.6 or less.

The beverage of the present invention is a packaged acidic beverage comprising γ-aminobutyric acid (GABA) at 100 mg/L or more and 20 billion cells/L or more of dead bacterial cells of one or more types of lactic acid bacteria and/or bacteria in the present invention 1 and having a pH of 4.6 or less. Other than this, there is no particular difference from ordinary "packaged acidic beverages" in terms of production raw materials used, production methods, and production conditions.

The type of beverage in the present invention is not particularly limited as long as it is a packaged acidic beverage. However, preferred is a packaged acidic milk beverage (i.e., a packaged acidic beverage containing milk components). As used herein, the term "milk beverage" means a beverage containing milk components, for example, a beverage with a milk solid content of 0.1 wt% or more, 0.5 wt% or more, 1 wt% or more, 2 wt% or more, or 3 wt% or more. The upper limit of milk solid content in the "milk beverage" is 15 wt%, 10 wt%, 5 wt%, etc.

The beverage of the present invention may be produced by being adjusted, at any of steps in a typical production method, to 500 million cells/L or more (e.g., 20 billion cells/L or more) of dead bacterial cells of one or more types of lactic acid bacteria and/or bacteria in the present invention 1, 100 mg/L or more of GABA, and a pH of 4.6 or less.

The beverage of the present invention is a packaged beverage. Examples of a container therefor include a resin bottle container (e.g., a PET bottle, a polypropylene bottle, a polyvinyl chloride bottle); a bin container; a can container; and other containers.

The beverage of the present invention does not have to be heat-sterilized, but may be heat-sterilized from the viewpoint of shelf life improvement. As for the methods and conditions of heat sterilization treatment, it is possible to use common methods and conditions used for beverages such as packaged beverages.

### (Production method of the present invention)

The production method of the present invention is not particularly limited as long as it is a method for producing a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of lactic acid bacteria and/or bacteria in the present invention 1 in the production of the packaged acidic beverage.

The beverage of the present invention may be produced by a conventionally known method for producing a packaged acidic beverage, except that the pH is set to 4.6 or less, GABA is set to 100 mg/L or more, and dead bacterial cells of one or more types of lactic acid bacteria and/or bacteria in the present invention 1 are set to 500 million cells/L or more (e.g., 20 billion cells/L or more).

More specific examples of the method of including, in the beverage, 500 million cells/L or more (e.g., 20 billion cells/L or more) of dead bacterial cells of one or more types of lactic acid bacteria and/or bacteria in the present invention 1 include a method of including 500 million cells/L or more (e.g., 20 billion cells/L or more) of dead bacterial cells of one or more types of lactic acid bacteria and/or bacteria in the present invention 1 in a production raw material for the beverage production (e.g., "water", "water containing 100 mg/L or more of GABA", or "the water further containing part or all of given components in water") in the production of the packaged acidic beverage. Alternatively, the examples include a method of including, in water, "dead bacterial cells of one or more types of lactic acid bacteria and/or bacteria in the present invention 1" and "GABA"; or a method of simultaneously including, in water, the above components and part or all of given components.

More specific examples of the method of setting (preferably, the method of adjusting) the GABA concentration in the beverage to 100 mg/L or more include a method of setting the GABA concentration in the beverage to 100 mg/L or more by including "GABA" in a production raw material for the beverage production (e.g., "water", "water containing 500 million cells/L or more (e.g., 20 billion cells/L or more) of dead bacterial cells of one or more types of lactic acid bacteria and/or bacteria in the present invention 1", or "the water further containing part or all of given components in water") in the production of the packaged acidic beverage. Alternatively, the examples include: a method of including, in water, "dead bacterial cells of one or more types of lactic acid bacteria and/or bacteria in the present invention 1" and "GABA"; or a method of simultaneously including, in water, the above components and part or all of given components.

In the production method of the present invention, dead bacterial cells of a lactic acid bacterium and/or a bacterium in the present invention 1 and GABA are included in the beverage as essential ingredients. The production method of the present invention may comprise including any one or more additives selected from proteins, acidulants, flavoring agents, pigments, sweeteners, fruit juices, antioxidants, preservatives, stabilizers, emulsifying agents, and pH-adjusting agents as given components.

In the production method of the present invention, there are no particular restrictions on, for instance, the order in which the production raw materials are included as long as the beverage of the present invention can be produced. After the liquid in which the production raw materials are mixed is prepared, the liquid may be filled into a container and the container may be sealed to prepare the beverage of the present invention.

In the production method of the present invention, the beverage does not have to be heat-sterilized, but may be heat-sterilized from the viewpoint of shelf life improvement. Examples of the heat sterilization method include, but are not particularly limited to, high temperature short time sterilization (HTST method), pasteurization, ultra high temperature heat treatment (UHT method), and retort sterilization.

### (Suppression method of the present invention)

The suppression method of the present invention is not particularly limited as long as it is a method of suppressing a specific sour taste during drinking of a packaged acidic beverage containing γ-aminobutyric acid (GABA) at 100 mg/L or more and having a pH of 4.6 or less, the method comprising including, in the beverage, 500 million cells/L or more (e.g., 20 billion cells/L or more) of dead bacterial cells of one or more types of lactic acid bacteria and/or bacteria in the present invention 1 in the production of the packaged acidic beverage.

The method of including, in the beverage, 500 million cells/L or more (e.g., 20 billion cells/L or more) of dead bacterial cells of one or more types of lactic acid bacteria and/or bacteria in the present invention 1 and the method of setting the GABA concentration in the beverage to 100 mg/L or more may use substantially the same methods as the methods described above (the production method of the present invention).

### (To suppress specific sour taste)

The beverage of the present invention is a beverage with a suppressed specific sour taste in a packaged acidic beverage containing GABA at 100 mg/L or more. As used herein, the term "specific sour taste" means astringent and pungent acidity that makes the sides of the jaw squeak, as produced by a combination of the sour taste of an acidulant in an acidic beverage and the peculiar distinct taste of GABA itself.

In the present invention, the beverage "with suppressed specific sour taste" means a beverage with suppressed specific sour taste during drinking when compared with a beverage produced by the same production method using the same type of raw materials at the same final concentrations (hereinafter also indicated as "control beverage"), except that dead bacterial cells of one or more types of lactic acid bacteria and/or bacteria in the present invention 1 are not included.

Trained panelists can easily and clearly determine how much "specific sour taste" is produced by a certain beverage and how is the "specific sour taste" is like (e.g., suppressed or not) when compared with the control beverage. General procedures may be used for the evaluation criteria and for finalizing the evaluations among the panelists. The number of panelists who evaluate the sensory qualities in the present invention may be one. From the viewpoint of obtaining more objective evaluation, the lower limit of the number of panelists may be set to, for example, 2 or more and preferably 4 or more. From the viewpoint of simplifying the evaluation test, the upper limit of the number of panelists may be set to, for example, 20 or less, 10 or less, or 7 or less. The rating of the specific sour taste caused by each beverage in the case of two or more panelists may use, for example, the average of all panelists' ratings for the specific sour taste caused by the beverage, or may use the lowest rating among the panelists. If a score is assigned to each evaluation criterion, the average of all panelists' scores may be used as the beverage's specific sour taste rating, or the lowest score among the panelists may be used. In addition, the point closest to the average of respective panelists' points graded by increments of 0.25 points from 1 point to 10 points may be evaluated as the sour taste specific to the beverage. Note that in the case of two or more panelists, the variation of each panelist's evaluation should be reduced. For this purpose, it is preferable to work on the sharing of evaluation criteria so that each panelist shares the evaluation criteria as much as possible before the actual sensory evaluation test is conducted. Such a work on the sharing includes evaluating, by each panelist, how the sensory qualities of multiple known standard beverages correspond to the grade of specific sour taste in the present invention, and then comparing the scores to make sure that each panelist has no significant difference in the evaluation criteria. In addition, it is preferable that such a work on the sharing of the evaluation criteria should be conducted in advance, so that the standard deviation of each panelist's in-mouth astringency score is within 0.6.

To evaluate how much specific sour taste in the present invention is caused in a certain beverage, for example, substantially the same method as the method using, for instance, the evaluation criteria (a 10-point scale from 1 point to 10 points) described in Study 1 and others of the below-described Examples or preferably the same method as the method using, for instance, the evaluation criteria (a 10-point scale from 1 point to 10 points) described in Study 1 and others of the below-described Examples may be suitably used. More specifically, a sensory evaluation test is performed by multiple panelists on a 10-point scale from 1 point to 10 points; the average of those scores may be calculated; and the point closest to the above average of points graded by increments of 0.25 points from 1 point to 10 points is used to evaluate the sour taste specific to the beverage. This method can be suitably used. Such a method may be used to evaluate specific sour taste. In this case, a beverage with a score at least one scale (i.e., 0.25) lower than that of the control beverage is considered to be a beverage with suppressed specific sour taste. The beverage with a score preferably at least 2 scales (i.e. 0.5), more preferably at least 3 scales (i.e. 0.75), still more preferably at least 4 scales (i.e. 1), still more preferably at least 5 scales (i.e. 1.25), still more preferably at least 6 scales (i.e. 1.5), still more preferably at least 7 scales (i.e. 1.75), still more preferably at least 8 scales (i.e. 2), still more preferably at least 9 scales (i.e. 2.25), and still more preferably at least 10 scales (i.e., 2.5) lower than that of the control beverage is suitably listed as the beverage with suppressed specific sour taste.

Hereinafter, the present invention is described in detail with Examples, but the present invention is not limited to these Examples.

### Examples

### [Study 1] To check occurrence of "specific sour taste" during drinking of acidic beverage containing GABA

The following study was conducted to determine how the inclusion of GABA in an acidic beverage affected the flavor of the acidic beverage.

### (1. To prepare sample beverage of acidic beverage)

GABA (manufactured by Pharma Foods International Co., Ltd.), fructose-glucose liquid sugar, and skimmed milk powder (protein content: 36 wt%) were included in ionexchanged water to the concentrations designated in Table 1 below, and 0.1 wt% of soybean polysaccharides as a stabilizer was also included. Anhydrous citric acid was further included for preparation to have a pH listed in Table 1. The mixture was filled into a can container and pasteurized at 80°C for 10 minutes. In this way, each sample beverage of Test Examples 1 to 7 was prepared. Note that the protein concentrations in Table 1 represent the concentrations of proteins derived from skimmed milk powder in the beverages.

### (2. Sensory evaluation test)

The grade of "specific sour taste" during drinking of each beverage sample of Test Examples 1 to 7 obtained was evaluated, in a sensory evaluation test, by 4 trained expert panelists using a 10-point scale (1, 2, 3, 4, 5, 6, 7, 8, 9, and 10 points). The evaluation criteria were set such that the grade of "specific sour taste" caused by the sample beverage (GABA concentration: 0 mg/L) of Test Example 1 was assigned 1 point ("no specific sour taste"); in addition, the grade of "specific sour taste" caused by the sample beverage (GABA concentration: 6000 mg/L) of Test Example 6 was assigned 10 points ("very strong specific sour taste"); and the evaluation criteria, in which the grade of specific sour taste was divided according to the above-mentioned 10-point scale, were adopted. In such evaluation criteria, the higher the point, the greater the grade of specific sour taste.

In addition, the average of 4 panelists' scores for the Test Example sample was used to evaluate the specific sour taste caused by each Test Example sample. The standard deviation of each panelist's score for each sample beverage was 0.58 or less in any of the sample beverages.

Table 1 shows the results of such a sensory evaluation test.

**[Table 1]**

| | Test Example | | | | | | |
|---|---|---|---|---|---|---|---|
| | 1 | 2 | 3 | 4 | 5 | 6 | 7 |
| Fructose-glucose liquid sugar (wt%) | 9 | | | | | | |
| pH | 3.8 | | | | | | 4.6 |
| Protein (wt%) | 0.47 | | | | | | |
| GABA (mg/L) | 0 | 100 | 150 | 200 | 1000 | 6000 | 6000 |
| Specific sour taste evaluation | 1 | 1.25 | 3.75 | 4.75 | 8.5 | 10 | 6 |

The results of Table 1 have demonstrated that when the GABA concentration is 100 mg/L pr more, a "specific sour taste" occurs and the "specific sour taste" becomes stronger in a GABA concentration-dependent manner. In addition, when Test Examples 6 and 7 are compared, it has been demonstrated that a lower pH makes the "specific sour taste" stronger.

### [Study 2] How inclusion of dead bacterial cells of lactic acid bacterium affected specific sour taste

The following study was conducted to determine how the inclusion of dead bacterial cells of a lactic acid bacterium affected the sour taste specific to a GABA-containing acidic beverage.

### (1. To prepare sample beverage of acidic beverage)

GABA (manufactured by Pharma Foods International Co., Ltd.), dead bacterial cells of a lactic acid bacterium (dried dead bacterial cell powder of *Lactococcus lactis* subsp. *lactis* JCM5805 strain), fructose-glucose liquid sugar, and skimmed milk powder were included in ionexchanged water to the concentrations designated in Table 2 below, and 0.1 wt% of soybean polysaccharides as a stabilizer was also included. Anhydrous citric acid was further included for preparation to have a pH listed in Table 2. The mixture was filled into a can container and pasteurized at 80°C for 10 minutes. In this way, each sample beverage of Test Examples 9 to 17 was prepared. The sample beverages of Test Example 8 were also prepared in the same manner as in the cases of Test Examples 9 to 16, except that the dried dead bacterial cell powder of *Lactococcus lactis* subsp. *lactis* JCM5805 strain was not used. Note that the protein concentrations in Table 2 represent the concentrations of proteins derived from skimmed milk powder in the beverages.

### (2. Sensory evaluation test)

The grade of "specific sour taste" during drinking of each beverage sample of Test Examples 8 to 17 obtained was evaluated, in a sensory evaluation test, by 4 trained expert panelists using a 10-point scale (1, 2, 3, 4, 5, 6, 7, 8, 9, and 10 points). The evaluation criteria were set such that the grade of "specific sour taste" caused by the sample beverage (GABA concentration: 0 mg/L) of Test Example 1 in Table 1 was assigned 1 point ("no specific sour taste"); in addition, the grade of "specific sour taste" caused by the sample beverage (GABA concentration: 6000 mg/L) of Test Example 6 in Table 1 was assigned 10 points ("very strong specific sour taste"); and the evaluation criteria, in which the grade of specific sour taste was divided according to the above-mentioned 10-point scale, were adopted.

In addition, the average of 4 panelists' scores for the Test Example sample was used to evaluate the specific sour taste caused by each Test Example sample. The standard deviation of each panelist's score for each sample beverage was 0.58 or less in any of the sample beverages.

Table 2 shows the results of such a sensory evaluation test.

**[Table 2]**

| | Test Example | | | | | | | | | |
|---|---|---|---|---|---|---|---|---|---|---|
| | 8 | 9 | 10 | 11 | 12 | 13 | 14 | 15 | 16 | 17 |
| Fructose-glucose liquid sugar (wt%) | 9 | | | | | | | | | |
| pH | 3.8 | | | | | | | | | |
| Protein (wt%) | 0.47 | | | | | | | | | |
| GABA (mg/L) | 1000 | | | | | | | | | 6000 |
| Lactic acid bacterium concentration (100 million cells/L) | 0 | 50 | 200 | 500 | 1000 | 2000 | 3000 | 10000 | 40000 | 10000 |
| Specific sour taste evaluation | 8.5 | 8.5 | 7 | 7 | 6.75 | 6.5 | 6 | 5.25 | 4.75 | 9 |

In Table 2, the ratings ("7 to 4.75") of specific sour taste in Test Examples 10 to 16 were lower than the rating ("8.5") of specific sour taste in Test Example 8. This has demonstrated that inclusion of 20 billion cells/L or more of dead bacterial cells of a lactic acid bacterium in a GABA-containing acidic beverage can produce an effect of suppressing a specific sour taste.

In addition, the rating ("9") of specific sour taste in Test Example 17 in Table 2 was lower than the rating ("10") of specific sour taste in Test Example 6 in Table 1. This has demonstrated that even in Test Example 17, inclusion of dead bacterial cells of a lactic acid bacterium can produce an effect of suppressing a specific sour taste.

### [Study 3] How change in protein concentration affected specific sour taste

The following study was conducted to examine how the protein concentration affected the effect of suppressing a specific sour taste by dead bacterial cells of a lactic acid bacterium.

### (1. To prepare sample beverage of acidic beverage)

GABA (manufactured by Pharma Foods International Co., Ltd.), dead bacterial cells of a lactic acid bacterium (dried dead bacterial cell powder of *Lactococcus lactis* subsp. *lactis* JCM5805 strain), fructose-glucose liquid sugar, and skimmed milk powder were included in ion-exchanged water to the concentrations designated in Table 4 below, and 0.1 wt% of soybean polysaccharides as a stabilizer was also included. Anhydrous citric acid was further included for preparation to have a pH listed in Table 4. The mixture was filled into a can container and pasteurized at 80°C for 10 minutes. In this way, each sample beverage of Test Examples 15 and 24 to 29 was prepared. The sample beverages of Test Examples 8 and 18 to 23 were also prepared in the same manner as in the cases of Test Examples 15 and 24 to 29, except that the dried dead bacterial cell powder of *Lactococcus lactis* subsp. *lactis* JCM5805 strain was not used (Table 3). Note that the protein concentrations in Tables 3 and 4 represent the concentrations of proteins derived from skimmed milk powder in the beverages.

### (2. Sensory evaluation test)

The grade of "specific sour taste" during drinking of each beverage sample of Test Examples 8, 15, and 18 to 29 obtained was evaluated, in a sensory evaluation test, by 4 trained expert panelists using a 10-point scale (1, 2, 3, 4, 5, 6, 7, 8, 9, and 10 points). The evaluation criteria were set such that the grade of "specific sour taste" caused by the sample beverage (GABA concentration: 0 mg/L) of Test Example 1 in Table 1 was assigned 1 point ("no specific sour taste"); in addition, the grade of "specific sour taste" caused by the sample beverage (GABA concentration: 6000 mg/L) of Test Example 6 in Table 1 was assigned 10 points ("very strong specific sour taste");and the evaluation criteria, in which the grade of specific sour taste was divided according to the above-mentioned 10-point scale, were adopted.

In addition, the average of 4 panelists' scores for the Test Example sample was used to evaluate the specific sour taste caused by each Test Example sample. The standard deviation of each panelist's score for each sample beverage was 0.58 or less in any of the sample beverages.

Tables 3 and 4 show the results of such a sensory evaluation test.

**[Table 3]**

| | Test Example | | | | | | |
|---|---|---|---|---|---|---|---|
| | 18 | 19 | \| 20 | 21 | 8 | 22 | 23 |
| Fructose-glucose liquid sugar (wt%) | 9 | | | | | | |
| pH | 3.8 | | | | | | |
| Protein (wt%) | 0.036 | 0.072 | 0.11 | 0.22 | 0.47 | 1.0 | 1.3 |
| GABA (mg/L) | 1000 | | | | | | |
| Lactic acid bacterium concentration (100 million cells/L) | 0 | | | | | | |
| Specific sour taste evaluation | 7.5 | 7.5 | 7.5 | 7.75 | 8 | 7 | 6 |

**[Table 4]**

| | Test Example | | | | | | |
|---|---|---|---|---|---|---|---|
| | 24 | 25 | 26 | 27 | 15 | 28 | 29 |
| Fructose-glucose liquid sugar (wt%) | 9 | | | | | | |
| pH | 3.8 | | | | | | |
| Protein (wt%) | 0.036 | 0.072 | 0.11 | 0.22 | 0.47 | 1.0 | 1.3 |
| GABA (mg/L) | 1000 | | | | | | |
| Lactic acid bacterium concentration (100 million cells/L) | 10000 | | | | | | |
| Specific sour taste evaluation | 6 | 6 | 5.5 | 5.5 | 5.25 | 5 | 4.25 |

In Tables 3 and 4, Test Examples, in which the skimmed milk powder concentrations (i.e., the protein concentrations) are identical, (i.e., Test Examples 18 and 24, Test Examples 19 and 25, Test Examples 20 and 26, Test Examples 21 and 27, Test Examples 8 and 15, Test Examples 22 and 28, Test Examples 23 and 29) are compared. This comparison has demonstrated that inclusion of dead bacterial cells of a lactic acid bacterium can cause a decrease in a specific sour taste even at any protein concentration.

In addition, it has been demonstrated from the viewpoint of producing a higher effect of suppressing a specific sour taste that the suitable protein concentration is preferably 0.11 wt% or more (or 0.11 to 1.3 wt% or 0.11 to 1 wt%) and more preferably 0.22 wt% or more (or 0.22 to 1 wt% or 0.22 to 0.47 wt%).

### [Study 4] Influence on flavor when proteins other than milk protein were included

As mentioned above, a higher effect of suppressing a specific sour taste by dead bacterial cells of a lactic acid bacterium can be elicited in the presence of milk protein. The following study was conducted to determine whether this was also true when proteins other than milk protein were included.

### (1. To prepare sample beverage of acidic beverage)

GABA (manufactured by Pharma Foods International Co., Ltd.), dead bacterial cells of a lactic acid bacterium (dried dead bacterial cell powder of *Lactococcus lactis* subsp. *lactis* JCM5805 strain), fructose-glucose liquid sugar, and pea protein were included in ion-exchanged water to the concentrations designated in Table 5 below, and 0.1 wt% of soybean polysaccharides as a stabilizer was also included. Anhydrous citric acid was further included for preparation to have a pH listed in Table 5. The mixture was filled into a can container and pasteurized at 80°C for 10 minutes. In this way, each sample beverage of Test Example 33 was prepared. The sample beverages of Test Example 32 were also prepared in the same manner as in the cases of Test Example 33, except that the dried dead bacterial cell powder of *Lactococcus lactis* subsp. *lactis* JCM5805 strain was not used (Table 5). Note that the protein concentrations in Table 5 represent the concentrations of pea protein in the beverages.

The sample beverages of Test Examples 30 and 31 were prepared in the same manner as in the cases of Test Examples 32 and 33, respectively, except that no pea protein was used (Table 5).

### (2. Sensory evaluation test)

The grade of "specific sour taste" during drinking of each beverage sample of Test Examples 30 to 33 obtained was evaluated, in a sensory evaluation test, by 4 trained expert panelists using a 10-point scale (1, 2, 3, 4, 5, 6, 7, 8, 9, and 10 points). The evaluation criteria were set such that the grade of "specific sour taste" caused by the sample beverage (GABA concentration: 0 mg/L) of Test Example 1 in Table 1 was assigned 1 point ("no specific sour taste"); in addition, the grade of "specific sour taste" caused by the sample beverage (GABA concentration: 6000 mg/L) of Test Example 6 in Table 1 was assigned 10 points ("very strong specific sour taste"); and the evaluation criteria, in which the grade of specific sour taste was divided according to the above-mentioned 10-point scale, were adopted.

In addition, the average of 4 panelists' scores for the Test Example sample was used to evaluate the specific sour taste caused by each Test Example sample. The standard deviation of each panelist's score for each sample beverage was 0.58 or less in any of the sample beverages.

Table 5 shows the results of such a sensory evaluation test.

**[Table 5]**

| | Test Example | | | |
|---|---|---|---|---|
| | 30 | 31 | 32 | 33 |
| Fructose-glucose liquid sugar (wt%) | 9 | | | |
| pH | 3.8 | | | |
| Protein (wt%) | 0.0 | | 0.47 | |
| GABA (mg/L) | 1000 | | | |
| Lactic acid bacterium concentration (100 million cells/L) | 0 | 10000 | 0 | 10000 |
| Specific sour taste evaluation | 7 | 5.75 | 7 | 5 |

The results in Table 5 have demonstrated that even when plant proteins, which are proteins other than milk protein, are further included, a higher effect of suppressing a specific sour taste by dead bacterial cells of a lactic acid bacterium can be produced. Test Examples with the same pea protein concentration (i.e., Test Examples 30 and 31, Test Examples 32 and 33) are compared. In Test Example 33, where the protein concentration was higher than in Test Example 31, where the protein concentration was 0 wt%, the inclusion of dead bacterial cells of a lactic acid bacterium resulted in a more marked decrease in the specific sour taste.

### [Study 5] Preparation Example in case of using Lactobacillus rhamnosus CRL1505, i.e., lactic acid bacterium other than Lactococcus lactis subsp. lactis JCM5805

Instead of dead bacterial cells of *Lactococcus lactis* subsp. *lactis* JCM5805, dead bacterial cells of *Lactobacillus rhamnosus* CRL1505 were used to make a prototype of a magnesium-containing sugar-free beverage (with dead bacterial cells of *Lactobacillus rhamnosus* CRL1505: 1.3 billion cells/L, 15 billion cells/L, etc.) according to the method described in Study 2 above. Then, the dead bacterial cells of *Lactobacillus rhamnosus* CRL1505 were found to suppress the specific sour taste.

### Industrial Applicability

The present invention can provide a packaged acidic beverage such that a "sour taste" specific to an acidic beverage containing GABA in a prescribed concentration according to the present invention is suppressed, a production method therefor, and others.

## Claims

1. A packaged acidic beverage comprising γ-aminobutyric acid (GABA) at 100 mg/L or more and 500 million cells/L or more of dead bacterial cells of one or more types of lactic acid bacteria and having a pH of 4.6 or less.

2. The packaged acidic beverage according to claim 1, further comprising 0.01 wt% or more of protein.

3. The packaged acidic beverage according to claim 2, wherein the protein is one or more proteins selected from the group consisting of animal milk proteins and plant proteins.

4. A packaged acidic beverage comprising γ-aminobutyric acid (GABA) at 100 mg/L or more and 500 million cells/L or more of dead bacterial cells of one or more types of lactic acid bacteria and having a pH of 4.6 or less, wherein the lactic acid bacteria are one or more types selected from the group consisting of bacteria of the genus *Lactobacillus,* bacteria of the genus *Streptococcus,* bacteria of the genus *Lactococcus,* bacteria of the genus *Leuconostoc,* bacteria of the genus *Pediococcus,* bacteria of the genus *Enterococcus,* bacteria of the genus *Oenococcus,* bacteria of the genus *Bifidobacterium,* bacteria of the genus *Lentilactobacillus,* bacteria of the genus *Weissella,* and bacteria of the genus *Tetragenococcus.*

5. The packaged acidic beverage according to claim 4, wherein the lactic acid bacteria are *Lactobacillus rhamnosus.*

6. A packaged acidic beverage comprising γ-aminobutyric acid (GABA) at 100 mg/L or more and 500 million cells/L or more of dead bacterial cells of one or more types of bacteria capable of activating plasmacytoid dendritic cells, and having a pH of 4.6 or less.

7. A method for producing a packaged acidic beverage containing γ-aminobutyric acid (GABA) at 100 mg/L or more and having a pH of 4.6 or less, the method comprising including, in the beverage, 500 million cells/L or more of dead bacterial cells of one or more types of bacteria capable of activating plasmacytoid dendritic cells in the production of the packaged acidic beverage.

8. A method for producing a packaged acidic beverage containing γ-aminobutyric acid (GABA) at 100 mg/L or more and having a pH of 4.6 or less, the method comprising including, in the beverage, 500 million cells/L or more of dead bacterial cells of one or more types of lactic acid bacteria in the production of the packaged acidic beverage.

9. A method of suppressing a specific sour taste during drinking of a packaged acidic beverage containing γ-aminobutyric acid (GABA) at 100 mg/L or more and having a pH of 4.6 or less, the method comprising including, in the beverage, 500 million cells/L or more of dead bacterial cells of one or more types of bacteria capable of activating plasmacytoid dendritic cells in the production of the packaged acidic beverage.

10. A method of suppressing a specific sour taste during drinking of a packaged acidic beverage containing γ-aminobutyric acid (GABA) at 100 mg/L or more and having a pH of 4.6 or less, the method comprising including, in the beverage, 500 million cells/L or more of dead bacterial cells of one or more types of lactic acid bacteria in the production of the packaged acidic beverage.
